# EUROPEAN PATENT APPLICATION

(11) **EP 4 517 084 A1**
(43) Date of publication of application: **05.03.2025**
(21) Application number: 23315338.6
(22) Date of filing: 04.09.2023
(51) Int. Cl.: F03D 13/25

(54) **FLOAT FOR OFFSHORE WIND PLATFORMS**

(71) Applicant: TotalEnergies OneTech, 92400 Courbevoie (FR)
(72) Inventor: Aubert, Jean-Michel, 92400 COURBEVOIE (FR); Raboin, Jean-Christophe, 92400 COURBEVOIE (FR)
(74) Representative: Innovincia

(57) **Abstract**

The invention relates to an offshore wind turbine float (2) comprising an upper metal wall (4) forming an upper end of the float, a lower metal wall (6, 46, 60) forming a lower end of the float, and at least one side wall (8, 18, 28, 28', 48, 58) connecting the upper and lower metal walls to create a sealed enclosure for the float, wherein the side wall (8, 18, 28, 28', 48, 58) comprises:
- an external metal panel (10, 20, 30, 30', 40, 50),
- an internal metal panel (12, 22, 32, 32', 42, 52) parallel to the external panel,
- at least one corrugated metal sheet (14, 24, 34, 34', 44', 44", 54) extending within a space formed between the external metal panel and the internal metal panel, wherein the corrugated metal sheet is attached to both the internal metal panel and the external metal panel.

## Description

The invention relates to offshore wind turbine platforms, and more particularly to floats for such offshore wind turbine platforms.

It is known in the context of offshore wind turbine installations to place a wind turbine on a floating platform. To do so, the platform is equipped with multiple floats to keep it above the water, in addition to anchoring elements securing the platform to the seabed.

Floating wind turbine platforms are generally made of steel, such as carbon steel, or even reinforced concrete. Regarding reinforced concrete platforms, they exhibit good mechanical performance and resistance to corrosion but result in significant increases in the platform's mass and therefore the dimensions of its anchorages.

Steel platforms are traditionally constructed with steel plates attached to each other, for example by welding them together, and reinforced by steel reinforcements welded to the steel plates, which act as stiffeners to maintain the structural integrity and counteract the effects of waves. To enable buoyancy, at least one plate assembly forms an airtight internal volume.

The above-described architecture for steel platforms leads to increased manufacturing costs due to the welding of reinforcements to the steel plates, as well as the need to apply an anti-corrosion coating to all surfaces susceptible to corrosion, which represents a significant surface area when considering the welded reinforcements. Moreover, considering the large number of visible welds exposed to corrosion and the relief created by the reinforcements, significant and costly monitoring and maintenance of the platform are required.

The invention aims to provide a float for an offshore wind turbine platform that reduces manufacturing and maintenance costs while maintaining good mechanical performance, particularly resistance to waves.

To this end, the invention relates to a float for an offshore wind turbine platform comprising an upper metal wall forming an upper end of the float, a lower metal wall forming a lower end of the float, and at least one side wall connecting the upper and lower metal walls to create a watertight enclosure of the float. The side wall comprises:
- an external metal panel,
- an internal metal panel parallel to the external panel,
- at least one corrugated metal sheet extending in a space between the external metal panel and the internal metal panel, the corrugated metal sheet being attached to both internal metal panel and external metal panel.

Thus, a lighter float is obtained compared to prior art structures because it is devoid of reinforcements, at least at the level of the side wall(s), while maintaining optimal mechanical properties due to the structure of the side wall(s).

Furthermore, the absence of reinforcements reduces the surface area requiring an anti-corrosion coating, resulting in cost savings in production. This absence also allows a reduction in the external dimensions of the float, resulting in improved resistance to waves and ocean currents.

The attachment points between the panels and the corrugated sheet are not exposed to external-marine conditions, reducing float maintenance costs.

The offshore wind turbine float can comprise at least one of the following features
- the side wall is a tubular wall extending between circular upper and lower metal walls and closing both ends of the tubular wall;
- the offshore wind turbine float comprise multiple flat side walls attached to each other to form the side wall, and attached to the upper and lower metal walls,
- at least one flat side wall forms a closed and airtight volume relative to the other flat side walls,
- at least one flat side wall comprises at least one connecting end to a second wall formed solely by the external metal panel and including a fold,
- the width of the lower metal wall is larger than the width of the remaining float,
- the corrugated metal sheet is glued to at least one of the internal and external metal panel,
- the corrugated metal sheet is welded to at least one of the internal and external metal panels by resistance welding,
- the upper metal wall and/or the lower metal wall comprise at least one stiffener,
- wherein the upper metal wall and/or the lower-metal wall comprise:
   - an external metal panel,
   - an internal metal panel parallel to the external panel,
   - at least one corrugated metal sheet extending within a space formed between the external metal panel and the internal metal panel, wherein the corrugated metal sheet is attached to both the internal metal panel and the external metal panel.
- the side wall comprises several superimposed corrugated metal sheets,
- the amplitude and period of the corrugations are different from one corrugated metal sheet to another, a flat metal sheet being preferably arranged between two consecutive corrugated sheets,
- at least one wall of the float comprises at least one pressurizing device of the enclosure of the float,
- the pressurizing device is configured to maintain a constant overpressure in the enclosure of the float,
- at least one part of the corrugated metal sheet is dimensioned and attached to the internal metal panel and/or the external metal panel to form at least one sealed compartment between the corrugated metal sheet and the internal metal panel and/or the external metal panel, and
- the internal and external metal panels are smooth.

The invention also relates to an offshore wind turbine platform comprising at least one float according to the invention.

The invention also relates to a panel intended to form at least one part of an offshore wind turbine float, the panel comprising:
- an external metal panel,
- an internal metal panel parallel to the external panel,
- at least one corrugated metal sheet extending within a space formed between the external metal panel and the internal metal panel, wherein the corrugated metal sheet is attached to both the internal metal panel and the external metal panel, the panel forming a sealed internal volume.

### Brief description of figures

The invention will be better understood by reading the following description, given solely as an example and referring to the accompanying drawings in which:
Figure 1 is a representation of an assembly of a float according to a first embodiment of the invention,
Figure 2 is an exploded view of a side wall of a float according to a first variant of a second embodiment of the invention,
Figure 3 is an assembled view of a side wall of a float according to the first variant of the second embodiment of the invention,
Figure 4 is a view of the side walls of a float according to the first variant of the second embodiment of the invention,
Figure 5 is an assembled view of a side wall of a section of the mast according to a second variant of the second embodiment of the invention,
Figure 6 is an assembled view of a side wall of a float according to a third variant of the second embodiment of the invention,
Figure 7 is a view of the side walls of a float according to the third variant of the second embodiment of the invention,
Figure 8 is an assembled view of a side wall of a section of the mast according to a fourth variant of the second embodiment of the invention,
Figure 9 is a cross-sectional view of a part of a float according to a third embodiment of the invention, and
Figure 10 is a view of the side walls of a float according to a fourth embodiment of the invention.

### Detailed description

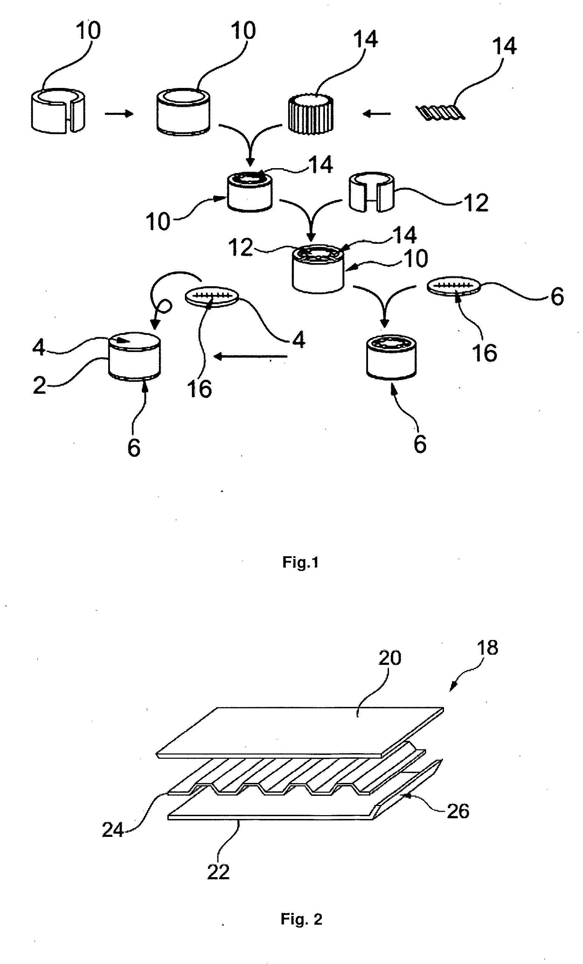

We are now referring to figure 1 illustrating an assembly of an offshore wind turbine float 2 according to a first embodiment of the invention. The float 2 comprises an upper metal wall 4 forming an upper end of the float, a lower metal wall 6 forming a lower end of the float, and one side wall 8 connecting the upper and lower metal walls to create a sealed enclosure for the float 2, the side wall comprising:
- an external metal panel 10,
- an internal metal panel parallel to the external panel 12,
- at least one corrugated metal sheet 14 extending within a space formed between the external metal panel 10 and the internal metal panel 12, the corrugated metal sheet 14 being attached to both the internal metal panel 12 and the external metal panel 10.

The upper metal wall 4, the lower metal wall 6, the external metal panel 10, the internal metal panel 12 and the corrugated metal sheet are preferably made of steel, more preferably of stainless steel. Preferably, the internal and external metal panels 10 and 12 are smooth, in order to reduce the amount of anti-corrosion coating to use in order to protect the float 2.

Preferably, the width of the lower metal wall 6 is larger than the width of the remaining float 2. This configuration provides float 2 with a stable footing for vertical water movements.

The corrugated metal sheet 14 can extend or not on the whole height of the side wall 8. This is the case for all the embodiments of the invention.

The attachment method of the corrugated metal sheet 14 to the external metal panel 10 and to the internal metal sheet 12 is preferably chosen among welding and gluing (exclusive or combined methods). A gluing method reduces manufacturing times compared to welding, while at the same time enabling good force transfer by providing an adhesive sufficiently elastic. For this purpose, an adhesive based on an acrylic or methacrylic acid ester polymer such as, for example, polymethyl or ethyl methacrylate, or methyl or ethyl polyacrylate can be an acceptable adhesive for joining steel parts of any grade. The metal parts are preferably degreased before gluing. A simple checking step for the absence of greasy products can also be performed. In case of welding, the corrugated metal sheet 14 can be welded to at least one of the internal and external metal panels 10 and 12 by resistance welding. This method is preferred for its speed of execution (largely robotized), its mechanical quality and its cost effectivity.

The upper metal wall 4 and/or the lower metal wall 6 can comprise at least one stiffener 16, as illustrated in figure 1.

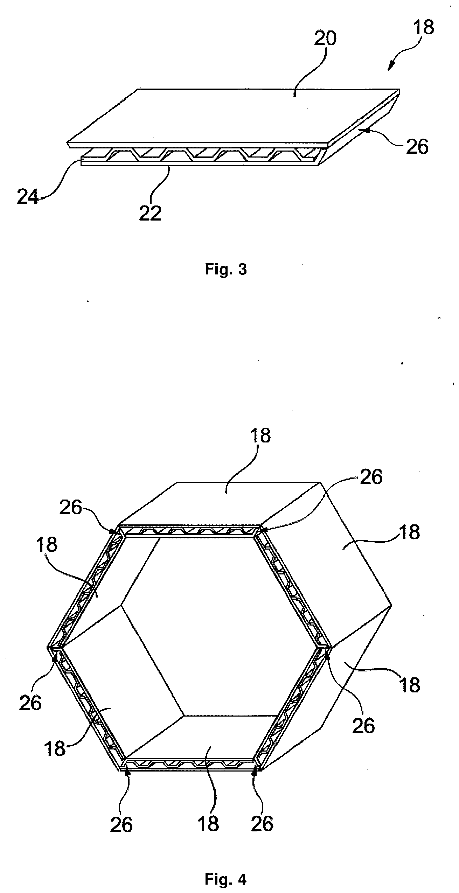

Preferably, at least one lateral face of the side wall 8 (i.e., the free ends of the side wall 8) is closed by a junction between the external metal wall 10 and the internal metal wall 12, as shown on figure 3 on which an external metal panel 10 end 26 is folded to be attached, for example by welding, to the internal metal panel 12. Alternatively to a direct attachment between the external metal panel 10 and the internal metal panel 12, a third part can be provided to ensure the link between these two panels. For example, the upper metal wall 4 and the lower metal wall 6 allows to close the gap between the external metal panel 10 and the internal metal panel 12 when the float 2 is assembled. Preferably, all the lateral faces of the side wall 8 are closed thanks to at least one of the alternatives described above in order to form the side wall 8 as a sealed space. Thanks to this possibility, and in case of a float 2 made with several side walls 8, some water can come into a side wall 8, for example after the appearance of a breach in the latter, without coming into other side walls 8.

Preferably, at least one part of the corrugated metal sheet 14 is dimensioned and attached to the internal metal panel 12 and/or the external metal panel 10 to form at least one sealed compartment between the corrugated metal sheet 14 and the internal metal panel 12 and/or the external metal panel 10. Thanks to this possibility, some water can come into a side wall 8 in a sub-volume formed by the corrugated metal sheet 14 and the external and/or internal metal panels 10 and 12, for example after the appearance of a breach in the latter, without coming into other parts of the side wall 8.

Figure 1 illustrates a first embodiment of the float 2 according to the invention. This figure shows the construction of a float 2 comprising a tubular side wall 8.

A first metal coil sheet, with a thickness comprised between 5 and 15 millimeters, for example equal to 7 millimeters, and a wideness approximatively equal to 2 meters, is bent with a radius of curvature of 10 meters to form a first cylinder of 20 meters of diameter. The outer edges are chamfered and the abutting edges are welded to form the first tube, 20 meters in diameter and 2 meters long. The external metal panel 10 is then formed.

A corrugated metal sheet with a thickness comprised between 2 and 5 millimeters, an amplitude comprised between 100 and 300 millimeters and a period comprised between 100 and 500 millimeters is bent inside the external metal panel 10 so as to cover part (in the case of parts reserved for transmitting forces) or all of its internal surface. The corrugated metal sheet 14 flutes are positioned parallel to the external metal panel 10 axis of rotation. The corrugated metal sheet 14 is attached to the external metal panel 10 by gluing or welding, as described above. The yield strength of corrugated metal sheet is between 315 and 460 MPa.

In order to form the internal metal panel 12, a second metal coil sheet, with a thickness comprised between 5 and 15 millimeters, for example equal to 7 millimeters, and a wideness approximatively equal to 2 meters, is bent with a 9,9 meters radius of curvature to form a second 19,8 meters cylinder. The inner edges are chamfered and the 19,9 meters cylinder is lightly rolled up, taking care not to exceed the limits of elastic deformation, held in compression and then inserted into the assembly comprising the external metal panel 10 and the corrugated metal sheet 14. The face of the corrugated metal sheet 14 intended to be in contact with the internal metal panel 12 can be previously coated with an acrylic adhesive. The compression on the second cylinder is released and the outer walls of the second cylinder are pressed against the glue-coated flutes and held in place until the glue sets. Glue setting time is adapted to the glue specifications, typically from 1 to 48 hours. The inner edges of the second cylinder can be welded together to form a cylindrical steel sandwich panel.

The sandwich panel obtained is then welded to a circular steel floor with a thickness substantially equal to 21 millimeters and a diameter substantially equal to 21 meters forming the lower metal wall 6. As described above, and in this example, the lower metal wall 6 is larger than the remaining float 2 for the reason explained above.

The latter can comprise internal stiffeners 16 placed on the face of the lower metal wall 6 facing an internal volume of the float 2, and second stiffeners place in the part of the lower metal wall extending from the side wall 8. These second stiffeners can extend on the two faces of the lower metal wall 6, passing through holes realized in the latter, and can be welded to the lower metal wall 6 to transmit the forces to the entire surface of the lower metal wall 6.

Finally, a circular upper metal wall 4, with a thickness substantially equal to 21 millimeters and a diameter substantially equal to 20 meters, is welded to the assembly to form the float 2.

Figures 2 and 3 illustrate a side wall 18 according to a first variant of a second embodiment of the invention. This side wall 18 is flat and constituted by an external metal panel 20, an internal metal panel 22 and a corrugated metal sheet 24. The corrugated metal sheet 24 is attached to the external and internal metal panels 20 and 22 thanks to an attachment medium described above.

In this variant, one end 26 of the internal metal wall 22 is, as explained above, folded in order to be attached to the external metal panel 20 and to close one lateral face of the side wall 18. The folding angle can be comprised between 60° and 85°. The three other lateral faces of the side wall 18 are open. The number of faces closed by a folded end of the internal or external metal panels 20 or 22 can be superior to one lateral face, for example with two ends folded, using the same panel or the two panels with one folded end by panel.

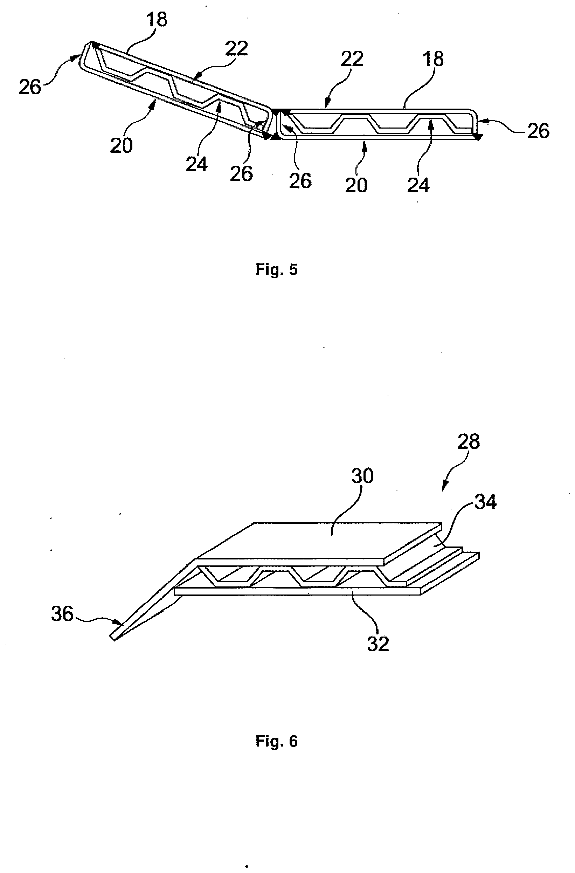

As shown on figure 4, the float 2 is formed by six side walls 18 (the number of side walls 18 can be different) welded together. One open lateral wall is closed by the junction between two side walls 8 (thanks to the folded end of another side wall 18), the other open lateral faces are closed by welding the upper and lower metal walls 4 and 6 (circular or not). In this configuration, each side wall 18 forms a closed and airtight volume relative to the other flat side walls 18. Figure 5 illustrates a second variant of the second embodiment of a side wall 18 according to the invention in which the internal metal panel 22 and the external metal panel 20 have both a folded end 26 in order to close two lateral faces of the side wall 18.

Figure 6 illustrates a side wall 28 according to a third variant of a second embodiment of the invention. This side wall 28 is flat and constituted by an external metal panel 30, an internal metal panel 32 and a corrugated metal sheet 34. The corrugated metal sheet 34 is attached to the external and internal metal panels 30 and 32 thanks to an attachment medium described above.

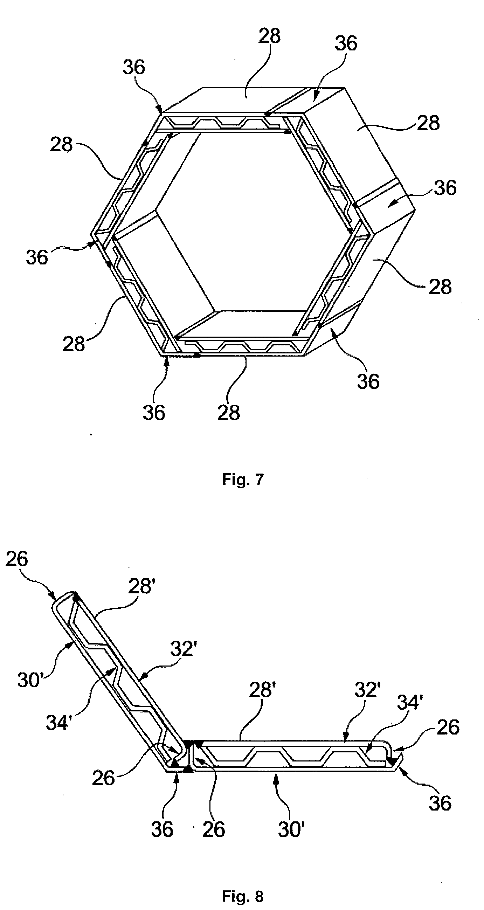

This variant is similar to the first variant shown in Figures 2 and 3, except that the two inner and outer metal panels 30 and 32 are not aligned. The folding angle of one end of the outer metal panel 30 is less than that of the first variant, being comprised between 30° and 60°. This end 36 protrudes from the inner metal panel 32 and is intended to close an open lateral face of another side wall 28, as shown in Figure 7. Figure 8 illustrates a fourth variant of the second embodiment of a side wall 28' according to the invention in which the internal metal panel 32' and the external metal panel 30' have both a folded end 26 in order to close two lateral faces of the side wall 28', and the external metal panel 30' comprises a folded end 36 in order to link two side walls 28' together.

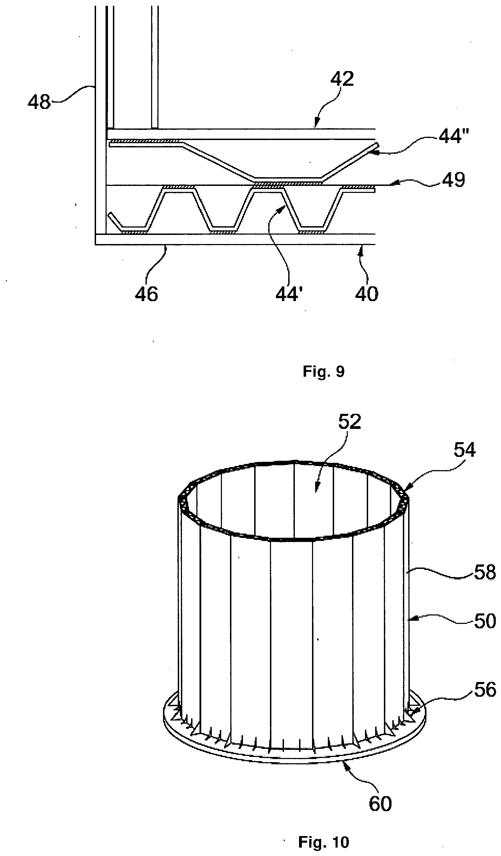

Figure 9 illustrates a cross-sectional view of a part of a float according to a third embodiment of the invention. In this embodiment, the upper metal wall and/or the lower metal wall 46 comprise:
- an external metal panel 40,
- an internal metal panel 42 parallel to the external metal panel 40,
- at least one corrugated metal sheet (44', 44") extending within a space formed between the external metal panel 40 and the internal metal panel 42, wherein the corrugated metal sheet (44', 44") is attached to both the internal metal panel 40 and the external metal panel 42.

In other words, and according to this embodiment, the structure of the upper metal wall and/or the lower metal wall 46 is similar to the structure of the side walls of the previous embodiments.

A first metal coil sheet with a thickness equal to 8 millimeters and a wideness equal to 4 meters is bent with a 12 meters radius of curvature to form a first cylinder with a diameter of 24 meters. The outer and inner edges are chamfered, and the abutting edges are welded to form a first tube of 24 meters of diameter and 4 meters long. The first tube, corresponding to the external metal panel of the side wall 48 is then welded to a 24 meters diameter, 8 millimeters thick discoidal steel base forming the external metal panel 40 lower metal wall 46.

A first corrugated steel sheet 44' with a thickness equal to 2 millimeters, with an amplitude of 100 millimeters, a period of 120 millimeters and a contact width per period and per face of 40 millimeters, is placed on the external metal panel 40 lower metal wall 46, so as to cover the entire internal surface of the latter. The part of the corrugated metal sheet 44' directly in contact with the external metal panel 40 lower metal wall 46 can be pre-coated with a methacrylate glue, generally a polymethyl methacrylate-based glue, before being placed in contact with the external metal panel 40 lower metal wall 46.

A flat metal sheet 49 with a thickness equal to 0,5 millimeter is bonded to the first corrugated metal sheet 44' so as to cover the entire exposed free surface, and can be optionally welded to the edge of the external metal panel of the side wall 48. A second corrugated metal sheet 44" with identical or different dimensional characteristics (thickness, amplitude, period) to the first corrugated metal sheet 44' is bonded to the flat metal sheet 48 in such a way that the corrugated patterns of the first corrugated metal sheet 44' and of the second corrugated metal sheet 44" are not collinear and are offset by an angle ranging from 30 to 90°, preferably 90°. Alternatively, the corrugated patterns of the first corrugated metal sheet 44' and of the second corrugated metal sheet 44" could be colinear.

An 8 millimeters-thick discoidal steel sheet, forming the internal metal panel 42 of the lower metal wall 46, preferably chamfered at the top of its edge, is placed and bonded to the second corrugated metal sheet 44". The edge of this discoidal metal sheet is preferably welded to the inside of the external metal panel 40.

Finally, a third corrugated metal sheet (not shown), for example with a thickness equal to 2 millimeters, with an amplitude of 100 millimeters, a period of 120 millimeters, is bonded to the external metal panel of the side wall to cover the entire inner surface. The third corrugated metal sheet flutes are positioned parallel to the external metal panel axis of rotation. The third corrugated metal sheet is joined to the external metal panel, for example by welding or gluing the parts of the third corrugated metal sheet in contact with the external metal panel of the side wall.

A second metal coil with a thickness equal to of 8 millimeters, a wideness equal to 3,9 meters, is deployed and bent to a radius of curvature of 9.9 meters to form a second cylinder, 19,8 meters long. The latter forms the internal metal panel of the side wall 48 and is placed as described in the first embodiment.

Finally, the upper metal wall is placed on the side wall and is welded to the latter. This upper metal wall could be formed by only wall metal sheet, or by a sandwich structure as described above.

In this embodiment, an example with a tubular side wall will be described. Of course, it is possible to manufacture an upper and/or lower metal walls with a sandwich structure with float comprising several flat side walls as described in the second embodiment.

Figure 10 illustrates the side walls of a float according to a fourth embodiment of the invention.

in this embodiment, a metal coil sheet, 1,8 meter wide and 3 millimeters thick, is unwound and bent to produce a corrugated metal sheet 54, 1,8 meter wide and 14 meters long, with longitudinal corrugations. The corrugations have a period of 200 millimeters and an amplitude of 180 millimeters. The corrugated metal sheet 54 is laid flat and adjusted to cover the entire surface of a first horizontally metal sheet, 2 meters wide, 14 meters long and 10 millimeters thick, with a longitudinal fold of 82.5° 202 millimeters from its edge. The contact areas between the first steel sheet and the corrugated metal sheet 54 are welded together. The first metal sheet forms the external metal panel 50.

A bead of acrylic adhesive is applied to the upper free part of each corrugation. A second steel sheet, 1,85 meter wide, 14 meters long and 10 millimeters thick, is bent longitudinally at a 15° angle 2,6 cm from the edge. The second metal sheet forms the internal metal panel 52. This second metal sheet is laid on top of the first metal sheet, topped by the corrugated metal sheet 54, by applying the 14 meters free edge of the 202 millimeters by 14 meters plane of the first metal sheet to the fold of the second 1,85 meter metal sheet, and the assembly is kept compressed to bring the acrylic adhesive into contact with the second sheet and allow it to set. The free edge of the first metal sheet is welded over the entire fold in contact with the second metal sheet.

Twenty-four side walls obtained as above are laid vertically with their 14 meters edge perpendicular to the plane of a 22 millimeters-thick, 15 meters-diameter steel floor (i.e., the lower metal wall 60) with internal stiffeners (not shown). This is illustrated on figure 8. The side walls 58 are centered on the lower metal wall 60 to form a regular polygon with a 15° angle between each side wall 58. The side walls 58 are welded edge-to-edge and to the lower metal wall 60. The lower metal wall 60 includes pre-welded stiffeners 56 designed to accommodate the side walls 58, which are embedded in them. The side walls 58 are welded to the pre-welded stiffeners 56. The inner part of the pre-welded stiffeners 56, which fits into the side walls 58, is coated with acrylic glue before each side wall 58 is installed.

Finally, an 18 millimeters-thick polygonal steel roof with stiffeners, forming the upper metal wall (not shown) is fitted, installed and welded to the assembly to form a polygonal float with offset flat welds.

Preferably, at least one wall of the float 2 (the upper metal wall 4, the internal metal panel 12) comprises at least one pressurizing device of the enclosure of the float 2. Pressurization of an internal volume of the float 2 allows, when combined with a pressure-measuring device, to check for any leaks that might occur as a result of welding defects or corrosion. It also makes it possible to limit the mechanical effects of swell, which tend to deform the outer face of the float 2, and therefore to potentially use thinner sheet metal. This is particularly interesting in the case of a float 2, and more particularly when the float is cylindrical in shape. The pressurization can be performed just once in order to check the float sealing, or can be maintained to obtain all the effects listed above. In such a case, at least one wall of the float 2 comprises a tapping equipped with a valve and a pressure gauge in order to pressurized the internal volume of the float 2. The float 2 can be pressurized with air, preferably dry air, at a pressure adapted to the conditions of use, typically between 0.1 and 2 bar, relative to atmospheric pressure.

Concerning the use of thinner metal sheet in order to manufacture the float 2, it is for example possible to use:
- a metal sheet having a thickness closer than 5 millimeters that 15 millimeters to form the external and/or internal metal panels,
- a metal sheet having a thickness comprised between 1 and 2 millimeters to form the corrugated metal sheet.

### List of numerical references

2: float
4: upper metal wall
6, 46, 60: lower metal wall
8, 18, 28, 28', 48, 58: side wall
10, 20, 30, 30', 40, 50: external metal panel
12, 22, 32, 32', 42, 52: internal metal panel
14, 24, 34, 34', 44', 44", 54: corrugated metal sheet
16: internal stiffener
26: end of the internal metal panel
36: end of the external metal panel
49: flat metal sheet
56: pre-welded stiffener

## Claims

1. Offshore wind turbine float (2) comprising an upper metal wall (4) forming an upper end of the float, a lower metal wall (6, 46, 60) forming a lower end of the float, and at least one side wall (8, 18, 28, 28', 48, 58) connecting the upper and lower metal walls to create a sealed enclosure for the float, wherein the side wall (8, 18, 28, 28', 48, 58) comprises:
- an external metal panel (10, 20, 30, 30', 40, 50),
- an internal metal panel (12, 22, 32, 32', 42, 52) parallel to the external panel,
- at least one corrugated metal sheet (14, 24, 34, 34', 44', 44", 54) extending within a space formed between the external metal panel and the internal metal panel, wherein the corrugated metal sheet is attached to both the internal metal panel and the external metal panel.

2. Offshore wind turbine float (2) according to claim 1, wherein the side wall (8) is a tubular wall extending between circular upper and lower metal walls and closing both ends of the tubular wall.

3. Offshore wind turbine float (2) according to claim 1, comprising multiple flat side walls (18, 28, 28', 48, 58) attached to each other to form the side wall, and attached to the upper and lower metal walls.

4. Offshore wind turbine float (2) according to claim 3, wherein at least one flat side wall (18, 28, 28', 48, 58) forms a closed and airtight volume relative to the other flat side walls (18, 28, 28', 48, 58).

5. Offshore wind turbine float (2) according to any preceding claim, wherein the corrugated metal sheet (14, 24, 34, 34', 44', 44", 54) is glued to at least one of the internal and external metal panels.

6. Offshore wind turbine float (2) according to any preceding claim, wherein the upper metal wall and/or the lower metal wall (46) comprise:
- an external metal panel (40),
- an internal metal panel (42) parallel to the external panel,
- at least one corrugated metal sheet (44', 44") extending within a space formed between the external metal panel and the internal metal panel, wherein the corrugated metal sheet is attached to both the internal metal panel and the external metal panel.

7. Offshore wind turbine float (2) according to the preceding claim, wherein the amplitude and period of the corrugations are different from one corrugated metal sheet (44', 44") to another, a flat metal sheet (49) being preferably arranged between two consecutive corrugated sheets (44', 44").

8. Offshore wind turbine float (2) according to any preceding claim, wherein the side wall comprises several superimposed corrugated metal sheets.

9. Offshore wind turbine float (2) according to any preceding claim, wherein at least one wall of the float comprises at least one pressurizing device of the enclosure of the float.

10. Panel intended to form at least one part of an offshore wind turbine float (2), the panel comprising:
- an external metal panel (10, 20, 30, 30', 40, 50),
- an internal metal panel (12, 22, 32, 32', 42, 52) parallel to the external panel,
- at least one corrugated metal sheet (14, 24, 34, 34', 44', 44", 54) extending within a space formed between the external metal panel and the internal metal panel, wherein the corrugated metal sheet is attached to both the internal metal panel and the external metal panel, the panel forming a sealed internal volume.
